# EUROPEAN PATENT SPECIFICATION

(11) **EP 0 513 084 B1**
(45) Date of publication and mention of the grant of the patent: **19.04.1995**
(21) Application number: 91903117.9
(22) Date of filing: 25.01.1991
(51) Int. Cl.: F16F 1/22, B60G 17/02, B60G 11/34

(54) **FRICTION LEAF SPRING FOR VEHICLES**
REIBUNGSBLATTFEDER FÜR FAHRZEUGE
RESSORT A LAMES DE FRICTION POUR VEHICULES

(30) Priority: 26.01.1990 GB 9001849
(43) Date of publication of application: 19.11.1992
(73) Proprietor: DETROIT STEEL PRODUCTS CO.INC., Morristown, IN 46161 (US)
(72) Inventor: REAST, John Bolland, Bedford MK40 2NR (GB)
(74) Representative: Britter, Keith Palmer
(86) International application number: GB9100110
(87) International publication number: WO9111636

(56) References cited:
- EP-A- 0 069 787
- FR-A- 569 470
- FR-A- 2 526 110
- FR-E- 30 767
- GB-A- 1 148 870
- US-A- 1 781 898
- US-A- 1 952 958
- US-A- 2 161 838
- US-A- 2 201 531
- US-A- 2 270 516
- US-A- 2 476 367
- US-A- 2 621 922
- US-A- 2 718 393
- PATENT ABSTRACTS OF JAPAN vol. 9, no. 92 (M-373)(1815) 20 April 1985, & JP-A-59217024 (HINO JIDOSHA KOGYO K.K.) 07 December 1984, see the whole document
- PATENT ABSTRACTS OF JAPAN vol. 11, no. 76 (M-569)(2523) 07 March 1987, & JP-A-61 233233 (NHK SPRING CO.) 17 October 1986, see the whole document

## Description

This invention relates to a friction leaf spring for vehicles, particularly heavy commercial vehicles.

In leaf spring vehicle suspensions, the friction between the spring leaves and between the springs themselves and their mountings has both advantages and disadvantages, especially when applied to heavy commercial vehicles. There are existing devices for increasing and/or decreasing this friction for different applications, although such devices tend to be a compromise, providing the higher or lower friction characteristic over the whole range or suspension deflections.

Low friction improves the isolation ride of a vehicle, especially at small load variations or deflections. For instance, when travelling on a relatively smooth road, any static friction tends to lock the suspension up, with small input variations causing the tyres of the vehicle to deflect. As the vehicle tyres are virtually undamped, the vehicle tends to oscillate on the tyres, thereby providing an unpleasant ride.

A disadvantage with low friction leaf spring arrangements is that sophisticated, highly durable dampers are required to control adequately the motions of the vehicle. To be fully effective, such dampers ideally require various settings to suit the different loading conditions to which the suspensions are subjected. Also, with low friction spring arrangements the rate of vehicle movement, especially in the roll mode, is generally too high under the dynamic loadings which occur when the vehicle is manoeuvring. This often necessitates the use of stabiliser/anti-roll bars which tend to reduce the quality and comfort of the vehicle ride by stiffening the wheel rate when only one wheel is deflected.

On commercial vehicles, where the distribution of load between axles varies considerably in dependence upon the particular application, a high friction spring arrangement tends to dampen any actual frequency combinations which can cause severe ride and handling problems. Therefore, high friction spring arrangements tend to be more adaptable over the practical ranges of vehicle applications.

The present trend for leaf spring suspensions is towards parabolic tapering thickness spring leaves which can be processed to produce more durable assemblies but which tend to have low inter-leaf friction. As indicated above, this tends to give, on the one hand, advantages in the vehicle ride for small input variations but, on the other hand, the disadvantages discussed above for larger deflections.

An attempt has been made to overcome these disadvantages by providing between those parts of a spring which need to contact each other but which also need to slide with respect to each other, such as, the spring and its mounting and/or adjacent spring leaves, an elastomeric member. By a "shearing" action, the elastomeric material of such a member is able to accommodate the differential sliding motion between the spring and its mounting and/or adjacent spring leaves.

However, these shear deflection members also suffer from disadvantages, such as, those discussed above in relation to the parabolic, tapering thickness leaf springs.

In US-A-2 621 922, there is disclosed a friction control device in the form of a leaf-end friction bearing structure for a vehicle suspension having at least two suspension elements constituted by a pair of spring leaves which are slidable with respect to each other in the fore-and-aft direction thereof, the structure comprising a resiliently deformable member which is located or locatable between the spring leaves and whose deformation in the fore-and aft direction of the spring leaves during use of the structure is limited.

In use of this prior art friction bearing structure, there is always sliding movement against friction between at least one of the spring leaves and the structure itself and when the resilient member of the structure has been deformed to its limit, which is generally indeterminate, as a result of frictional sliding movement between the structure and one of the spring leaves with which the resilient member interacts, only the other of the spring leaves is able to slide against friction with respect to the structure.

The inventive friction control device is, however, distinguished from the prior art structure of US-A-2 621 922, in that the at least two suspension elements are slidable with respect to each other against friction when the resilient member has been deformed to a predetermined limited degree.

Thus, with the inventive device, the suspension elements can only slide with respect to each other against friction when, and only when, the resilient member has been deformed to its predetermined limited degree, which is in direct contrast to the friction bearing structure of US-A-2 621 922 wherein there is always sliding movement against friction between at least one of the suspension elements, namely, the spring leaves, and the structure itself and, hence, between the leaves themselves.

Because deformation of the resilient member of this prior art structure is not limited to a predetermined degree, the exact point at which further frictional sliding movement between the leaves occurs, is indeterminate; whereas with the inventive device such point is predetermined to permit precise determination as to when the suspension elements can commence relative sliding movement against friction.

Accordingly, it is an object of the present invention to provide a deflectable shear member, or a vehicle suspension incorporating such a member, which overcomes, or at least substantially reduce, the disadvantages associated with the known suspension arrangements discussed above.

Thus, one aspect of the invention provides a friction control device for a vehicle suspension having at least two elements, such as leaves of a leaf spring, which are slidable with respect to each other in the fore-and-aft direction thereof, the device comprising a resiliently deformable member which is located or locatable between the elements and whose deformation in the fore-and-aft direction of the elements during use of the device is limited,
characterised in that the at least two elements are slidable with respect to each other against friction when the member has been deformed to a predetermined limited degree.

Such limiting deformation of the member, which is preferably of an elastomeric material, may be effected by means of a positive stop or a progressively increasing resistance terminating in a positive stop.

Preferably, the predetermined degree to which deformation of the member is limited, is defined by a positive stop.

In a preferred embodiment of inventive friction control device, the resiliently deformable member is secured between a pair of generally parallel plates, with means arranged to engage each other when the member is deformed to said predetermined degree and to define a positive stop therefor. Such engagement means may comprise opposed ends of each plate being bent inwardly with respect thereto, such that corresponding pairs of respective bent plate ends can engage each other, to provide the positive stop when deformation of the member in the fore-and-aft direction of the suspension elements reaches said predetermined degree.

In another embodiment, means are arranged to effect a progressively increasing resistance to deformation of the member, terminating in a positive stop, in which case, such progressively increasing resistance means can comprise a resiliently deformable element arranged to act between the plates, preferably between respective cooperating pairs of bent plate ends.

Further, the resiliently deformable member may be secured directly to one of the vehicle suspension elements, such that, in the preferred embodiment described above, one of the generally parallel plates is constituted by that element, whereby the resiliently deformable member is secured directly thereto, with the other plate and associated vehicle suspension element being slidable with respect to each other when the member has reached its limit of deformation.

The at least two elements of the vehicle suspension may be respective leaves of a multi-leaf spring of which at least one leaf is arranged to slide in frictional engagement with any associated plate, when the resilient deformable member is deformed to the predetermined limited degree and would otherwise deform further. Such an arrangement may also include means for clamping the leaves of the leaf spring together, with another resilient element located between the clamping means and at least one of the spring leaves, preferably with the other resilient element being secured to a clamp plate of such clamping means.

In a further embodiment of the inventive friction control device, the resiliently deformable member may be secured between the confronting faces of two components of a frame mounting bracket of a cam spring suspension arrangement, in which case, a lower one of the two frame mounting bracket components may be arranged upon an associated spring leaf, such that relative movement between the mounting bracket and the spring leaf which would otherwise cause further deformation of the deformable member, causes sliding motion, against friction, between that lower component and the leaf.

The resiliently deformable member is preferably made of an elastomeric material which may be either natural or synthetic, or, indeed, any other suitable, resiliently deformable material.

In order that the invention may be more fully understood, preferred embodiments in accordance therewith will now be described by way of example and with reference to the accompanying drawings in which:
Figure 1 is a side elevation in section of a prior art friction control device located between two leaves of a leaf spring;
Figure 2 is a side elevation in section of one embodiment of a friction control device in accordance with the invention, again located between two leaves of a leaf spring;
Figure 3 is a side elevation in section of a second embodiment of friction control device in accordance with the invention, once again located between two leaves of a leaf spring;
Figure 4 is a side elevation, again in section, of a third embodiment of friction control device in accordance with the invention, this time located between a leaf and a mounting bracket of a leaf spring arrangement;
Figure 5 is a side elevation in section of a modified form of the first embodiment of friction control device shown in Figure 2; and
Figures 6a and 6b are respective side and plan views of yet another embodiment of friction control device used in a particular, single leaf spring arrangement.

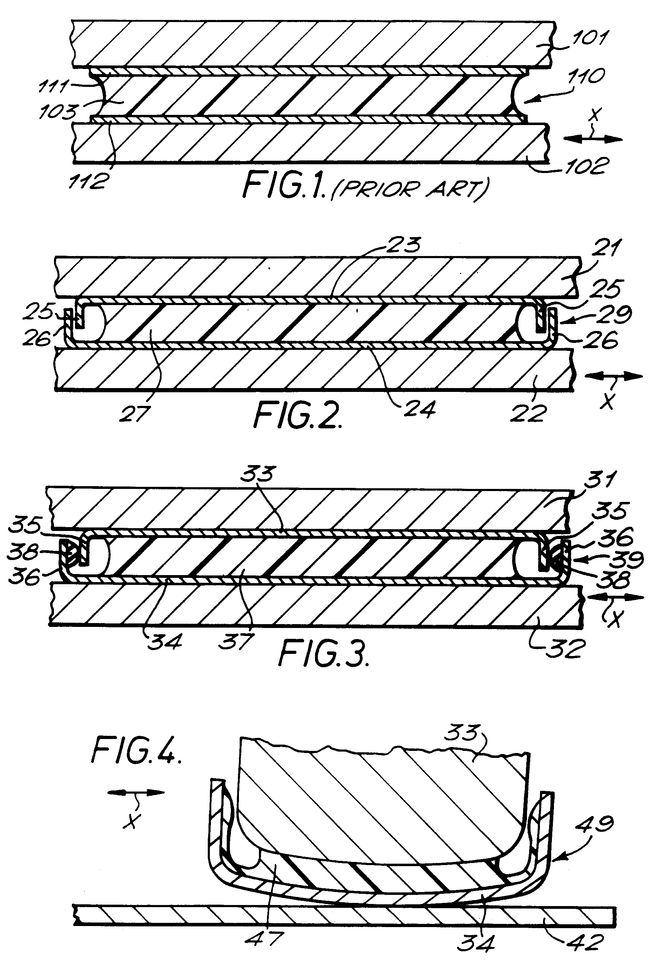

Referring firstly to Figure 1 of the drawings, a prior art arrangement comprises upper and lower leaves 101, 102 of a leaf spring vehicle suspension, between which is located a known form of friction control device 110, consisting of respective upper and lower metal plates 111, 112 between which is secured by any suitable means a resiliently deformable member 103.

This prior art arrangement is such that, under working conditions of the vehicle suspension, the upper leaf 101 and the upper metallic plate 111 cannot, or are highly unlikely to, slide with respect to each other and, in any case, the lower leaf 102 and lower metal plate 112 are secured to each other. Thus, any relative motion taking place in the fore-and-aft direction of the vehicle, as indicated by the double headed arrow X, between the upper and lower spring leaves 101, 102 is represented by the resilient deformation of the member 103 by the corresponding shearing force exerted thereupon in the fore-and-aft direction X. Such deformation of the member 103 tends to be uncontrollable and, hence, somewhat random in its effect.

Under extreme working conditions however, it is possible that sliding motion against friction between the upper spring leaf 101 and associated metal plate 111 of the friction control device 110 will come into effect, when the member 103 has reached the limit of its deformation in the fore-and-aft direction X.

A first embodiment of inventive friction control device, as shown in Figure 2, can be employed to overcome this and other disadvantages associated with the prior art arrangement described above with reference to Figure 1, by limiting the fore-and-aft deformation of the resiliently deformable member of the novel device. In Figure 2, a pair of adjacent, upper and lower leaves 21, 22 of a leaf spring vehicle suspension are separated by a friction control device in accordance with the invention, as indicated generally at 29. This device 29, as in the case of the prior art device 110 described above, also comprises a pair of upper and lower metal plates 23, 24. However, the opposed ends 25 of the upper plate 23 are bent downwardly and, similarly, the opposed ends 26 of the lower plate 24 are bent upwardly, such that they overlap with the downwardly extending ends 25 of the upper plate 23 being located within the confines of the upwardly extending ends 26 of the lower plate 24, thereby providing respective gaps between the adjacent plate ends 25, 26. In this manner, any fore-and-aft deformation of the associated resiliently deformable member 27, as a consequence certain working conditions of the vehicle suspension, is limited to a predetermined decree or amount by a positive stop provided by engagemen of one end 25 of the upper plate 23 with the associated end 26 of the lower plate 24 or vice versa. After such restricted shear deformation of the member 27 in the fore-and-aft direction X any further relative movement between the two leaves 21, 22 is effected by sliding motion against friction between the leaf 21, 22 and associated plate 23, 24 of the friction control device 29.

The second embodiment of inventive friction control device is illustrated in Figure 3, this being similar to the first embodiment described above in relation to Figure 2, except that that limited shear deformation of the resiliently deformable member 37 of the device 39 is subjected to a progressive restriction prior to being subjected to a positive stop, for any relative fore-and-aft movement between the upper and lower leaves 31, 32. Such progressive restriction is provided by a resiliently deformable element 28 positioned between each of the pair of downwardly and upwardly extending ends 35, 36 of respective upper and lower metal plates 33, 34 of the friction control device 39.

For sufficient fore-and-aft relative movement between the upper and lower plates 33, 34, resiliently deformable compression of the associated element 38 which provides the initial progressive restriction will eventually result in such movement being brought to a positive stop.

Any further relative movement between the upper and lower leaves 31, 32 of the suspension which, in the prior art arrangement, would otherwise result in greater shearing deformation of the member 37, causes the confronting faces of the upper/lower leaf 31, 32 and upper/lower plate 33,34 to move slidably with respect to each other, thereby generating the necessary friction therebetween.

A third embodiment of inventive friction control device is shown in Figure 4, as indicated generally at 49, applied to the adjacent faces of a frame mounting bracket of a cam spring suspension arrangement.

In this third embodiment of inventive friction control device 49, the resiliently deformable member 47 is secured between the confronting faces of the two components 33, 34 of the bracket which effectively replace the upper and lower plates 23, 24 and 33, 34 of the respective devices 29, 39 of the first two inventive embodiments described above in relation to Figures 2 and 3.

It is to be noted that in this third embodiment, the resiliently deformable material of the member 47 extends around the inside face of the lower bracket component 34, such that it is located between that component and the upper component 33, thereby providing limited deformation of the member 47 in a progressively restricted manner, before a positive stop is achieved, for relative movement between the two components 33, 34 fore-and-aft of the vehicle with which this particular suspension arrangement is assocoated. Relative movement between the mounting bracket and associated spring leaf 42 which, in the prior art arrangement, would otherwise cause further deformation of the member 47 of the friction control device 49, causes sliding motion, against friction, between the lower component 34 and the leaf 42.

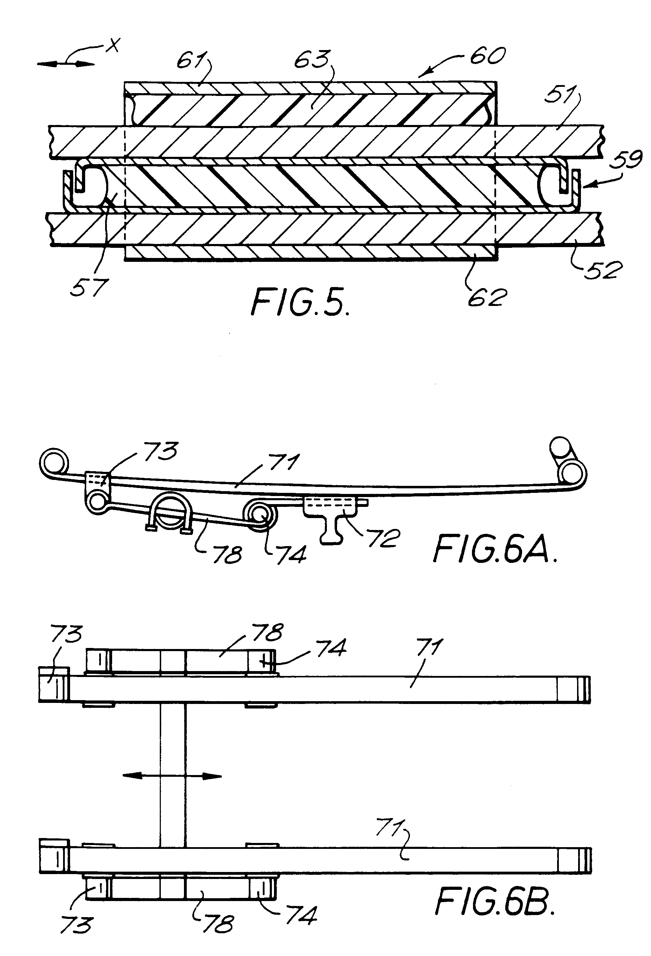

The fourth embodiment of inventive friction control device is illustrated in Figure 5 of the drawings, it being similar in construction to the first embodiments of Figure 2, except that an additional, external clamp 60 is employed.

The clamp 60 comprises upper and lower clamping plates 61, 62 and is clamped onto upper and lower leaves 51, 52 of a leaf spring vehicle suspension. Between the upper and lower leaves 51, 52 is located a friction control device 59, such as that described above with reference to Figure 2. Between the upper clamping plate 61 of the clamp 60 and the upper spring leaf 51 is provided a resilient element 62 secured to the plate 61.

This clamping arrangement provided by the clamp 61 serves to force the slidably movable components 51, 59, 52 of the basic leaf spring assembly together, as in the case of conventional friction increasing clamping devices. With the inventive device 59 employed in this arrangement, the friction will still be low for small suspension deflections but, as the shear deformation limit of the deformable member 57 applies at higher deflections, the required frictional effect comes into play at a higher value than that associated with the conventional leaf spring arrangement without the inventive friction control device present.

Thus, it can be seen that the four embodiments described above with reference to respective Figures 2 to 5 of the drawings, produce low or negligible friction for small movements of the associated leaf spring or other associated, spring arrangement but produces higher frictional forces for large deflections of the suspension. As indicated above, this inventive arrangement has particular application with a parabolic tapered leaf spring, thereby allowing for the exploitation of the spring's higher durability, whilst giving low friction characteristics for better quality and smoother surface ride but permitting use thereof where its low friction at high deflections would otherwise give rise to problems.

Also, the progressively restrictive shear deformation control of the deformable member of the inventive friction control device can be designed such that the restriction can be varied in dependence upon the compression of the shear deformable material of the member, namely, the load applied thereto. Thus, friction control can be varied or timed to match the load on the suspension spring.

A further application of the inventive device, or indeed the conventional, unlimited deformation device, such as that described above with reference to Figure 1, might be with radius arms or stabilizer bars associated with leaf springs, such as those des-described in our co-pending International Patent Application No. PCT/GB90/00436 (Publication No. WO 90/11201) entitled "Vehicle Suspension System".

In this arrangement, the radius arm, such as that illustrated at 78 in Figures 6A and 6B, could be attached to the spring leaf 71 or to the axle 72 by a clip 73 or bracket 74 or other suitable connecting means which incorporates a friction device of the prior art or, in modified form, in accordance with the invention, as defined above.

This particular application might be particularly advantageous when employed with single leaf springs, thereby providing a degree of friction which would otherwise be impossible to achieve with a one leaf arrangement. If the geometry and friction are tuned correctly, this particular application could assist in damping out axle torsional vibrations or spring windup oscillations under traction and braking of the vehicle, which normally give rise to problems with single leaf spring suspensions.

Further, it is to be appreciated that, in the relevant embodiment described above, particularly in relation to Figures 2, 3 and 5 of the drawings, the lower plate 24, 34 may be omitted, such that the lower leaf 22, 32, 52 effectively constitutes the lower plate, with the resiliently deformable member 27, 37, 57 being secured directly to that lower leaf. Alternatively, of course, such an arrangement may be applied to the other side of the device, whereby the upper leaf 21, 31, 51 effectively constitutes the upper plate 23, 33, with the member 27, 37, 57 secured directly to it.

## Claims

1. A friction control device (29) for a vehicle suspension having at least two elements (21, 22), such as leaves of a leaf spring, which are slidable with respect to each other in the fore-and-aft direction (X) thereof, the device (20) comprising a resiliently deformable member (27) which is located or locatable between the elements (21, 22) and whose deformation in the fore-and-aft direction (X) of the elements (21, 22) during use of the device (29) is limited,
characterised in that the at least two elements (21, 22) are slidable with respect to each other against friction when the member (27) has been deformed to a predetermined limited degree.

2. A device (29) according to claim 1, characterised in that the predetermined degree to which deformation of the member (27) is limited, is defined by a positive stop (25, 26).

3. A device (49) according to claim 1 or 2, characterised in that the resiliently deformable member (47) is secured directly to one of the vehicle suspension elements.

4. A device (29) according to claim 1 or 2 characterised by a pair of generally parallel plates (23, 24) between which the resiliently deformable member (27) is secured and which include means (25, 26) arranged to engage each other when the member (27) is deformed to said predetermined degree and to define a positive stop therefor.

5. A device (29) according to claim 4, characterised in that said engagement means comprises opposed ends (25, 26) of each plate (23, 24) being bent inwardly with respect thereto, such that corresponding pairs of respective bent plate ends (25, 26) can engage each other, to provide the positive stop when deformation of the member (27) reaches said predetermined degree.

6. A device (39) according to any preceding claim characterised by means (38) arranged to effect a progressively increasing resistance to deformation of the member (37), terminating in a or the positive stop, as the case may be.

7. A device (39) according to claim 6, when dependent upon claim 4 or 5, characterised in that said progressively increasing resistance means (39) comprises a resiliently deformable element (39) arranged to act between the plates (33, 34).

8. A device (39) according to claim 7, when claim 6 is dependent upon claim 5, characterised in that the resiliently deformable element (37) is arranged to act between respective cooperating pairs of bent plate ends (35, 36).

9. A device (29, 39) according to claim 4, or any of claims 5 to 8 when dependent thereon, characterised in that one of the generally parallel plates (23, 24: 33, 34) is constituted by the associated vehicle suspension element (21, 22: 31, 32), such that the resiliently deformable member (27, 37) is secured directly to that element (21, 22: 31, 32).

10. A device (59) according to any preceding claim, characterised in that said at least two elements (51, 52) of a vehicle suspension are respective leaves (51, 52) of a multi-leaf spring of which at least one is arranged to slide in frictional engagement with an or the associated plate, as the case may be, when the member (51) is deformed to said predetermined limited degree and would otherwise deform further

11. A device (59) according to claim 10 characterised by means (60) clamping the leaves (51, 52) of the leaf spring together, with another resilient element (63) located between said clamping means (60) and at least one (51) of the spring leaves.

12. A device (59) according to claim 11, characterised in that the other resilient element (63) is secured to a clamp plate (61) of said clamping means (60).

13. A device (49) according to claim 1 or 2, or claim 6 when dependent upon claim 1 or 2, characterised in that the resiliently deformable member (47) is secured between the confronting faces of two components (33, 34) of a frame mounting bracket of a cam spring suspension arrangement.

14. A device (49) according to claim 13, characterised in that a lower one (34) of the two frame mounting bracket components (33, 34) is arranged upon an associated spring leaf (42), such that relative movement between the mounting bracket and spring leaf (42) which would otherwise cause further deformation of the deformable member (47), causes sliding motion, against friction, between the lower component (34) and the leaf (42).

15. A device (29, 39, 49, 59) according to any preceding claim, characterised in that the deformable member 27, 37, 47, 57) is of an elastomeric material.

16. A vehicle suspension including a radius arm (78) or stabiliser bar attached to an associated spring leaf (71) or axle (72) by connecting means (73, 74) incorporating a friction control device (29, 39, 49, 59) according to any preceding claim.

17. A vehicle suspension according to claim 16, wherein said connecting means (73, 74) comprises a clip (73) or bracket (74).

18. A vehicle suspension incorporating a friction control device (29, 39, 49, 59) according to any of claims 1 to 15.

19. A vehicle incorporating a suspension according to any of claims 16 to 18.

## Patentansprüche

1. Reibungssteuerungs-Vorrichtung (29) für eine Fahrzeugaufhängung mit mindestens zwei Elementen (21, 22), wie z.B. Blättern einer Blattfeder, die in bezug zueinander in deren Vorwärts-Rückwärts-Richtung (X) gleitbar sind, wobei die Vorrichtung (20) ein elastisch verformbares Teil (27) aufweist, das zwischen den Elementen (21, 22) angeordnet ist oder angeordnet werden kann und dessen Verformung in der Vorwärts-Rückwärts-Richtung (X) der Elemente (21, 22) während der Verwendung der Vorrichtung (29) begrenzt ist, dadurch gekennzeichnet, daß die mindestens zwei Elemente (21, 22) in bezug zueinander gegen Reibung gleitbar sind, wenn das Teil (27) auf ein vorbestimmtes beschränktes Maß verformt wurde.

2. Vorrichtung (29) nach Anspruch 1, dadurch gekennzeichnet, daß das vorbestimmte Maß, auf welches eine Deformierung des Teils (27) beschränkt ist, durch einen formschlüssigen Anschlag (25, 26) begrenzt ist.

3. Vorrichtung (49) nach Anspruch 1 oder 2, dadurch gekennzeichnet, daß das elastisch verformbare Teil (47) direkt an einem der Fahrzeug-Aufhängungselemente befestigt ist.

4. Vorrichtung (29) nach Anspruch 1 oder 2, gekennzeichnet durch ein Paar von im allgemeinen parallelen Platten (23, 24), zwischen welchen das elastisch verformbare Teil (27) befestigt ist, und welche Einrichtungen (25, 26) aufweisen, die so angeordnet sind, daß sie ineinander eingreifen, wenn das Teil (27) auf das vorbestimmte Maß verformt wird, und hierfür einen formschlüssigen Anschlag definieren.

5. Vorrichtung (29) nach Anspruch 4, dadurch gekennzeichnet, daß die Eingriffseinrichtung einander gegenüberliegende Enden (25, 26) jeder Platte (23, 24) aufweist, die in bezug zu diesen nach innen gebogen sind, so daß entsprechende Paare von jeweils gebogenen Plattenenden (25, 26) ineinander eingreifen können, um den formschlüssigen Anschlag bereitzustellen, wenn die Deformierung des Teils (27) das vorbestimmte Maß erreicht.

6. Vorrichtung (39) nach einem der vorhergehenden Ansprüche, gekennzeichnet durch eine Einrichtung (38), die so ausgebildet ist, daß sie einen progressiv zunehmenden Widerstand gegen die Verformung des Teils (37) bewirkt, was in einem oder dem formschlüssigen Anschlag, je nach Fall, endet.

7. Vorrichtung (39) nach Anspruch 6, wenn dieser auf Anspruch 4 oder 5 rückbezogen ist, dadurch gekennzeichnet, daß die progressiv zunehmende Widerstandseinrichtung (39) ein elastisch verformbares Element (39) aufweist, das so ausgebildet ist, daß es zwischen den Platten (33, 34) wirkt.

8. Vorrichtung (39) nach Anspruch 7, wenn Anspruch 6 auf Anspruch 5 rückbezogen ist, dadurch gekennzeichnet, daß das elastisch verformbare Element (37) so ausgebildet ist, daß es zwischen jeweils zusammenwirkenden Paaren von gebogenen Plattenenden (35, 36) wirkt.

9. Vorrichtung (29, 39) nach Anspruch 4 oder einem der Ansprüche 5 bis 8, wenn sie auf diesen rückbezogen sind, dadurch gekennzeichnet, daß eine der im allgemeinen parallelen Platten (23, 24: 33, 34) von dem zugehörigen FahrzeugAufhängungselement (21, 22: 31, 32) gebildet ist, so daß das elastisch verformbare Teil (27, 37) direkt mit diesem Element (21, 22: 31, 32) verbunden ist.

10. Vorrichtung (59) nach einem der vorhergehenden Ansprüche, dadurch gekennzeichnet, daß mindestens zwei Elemente (51, 52) einer Fahrzeugaufhängung jeweils Blätter (51, 52) einer Mehrblattfeder sind, von denen mindestens eines so angeordnet ist, daß es, wenn das Teil (51) auf das vorbestimmte begrenzte Maß verformt ist, in Reibungseingriff mit einer oder der zugeordneten Platte, je nach Fall, gleitet, wobei das Teil (51) anderenfalls weiter verformt werden würde.

11. Vorrichtung (59) nach Anspruch 10, gekennzeichnet durch eine Einrichtung (60) zum Zusammenklemmen der Blätter (51, 52) der Blattfeder, wobei ein anderes elastisches Element (63) zwischen der Klemmeinrichtung (60) und mindestens einer (51) der Blattfedern angeordnet ist.

12. Vorrichtung (59) nach Anspruch 11, dadurch gekennzeichnet, daß das andere elastische Element (63) an einer Klemmplatte (61) der Klemmeinrichtung (60) befestigt ist.

13. Vorrichtung (49) nach Anspruch 1 oder 2, oder Anspruch 6, wenn dieser auf Anspruch 1 oder 2 rückbezogen ist, dadurch gekennzeichnet, daß das elastisch verformbare Teil (47) zwischen den einander zugewandten Flächen von zwei Komponenten (33, 34) eines Rahmen-Befestigungs-Halters einer Nockenfeder-Aufhängungsanordnung befestigt ist.

14. Vorrichtung (49) nach Anspruch 13, dadurch gekennzeichnet, daß die untere (34) der zwei Rahmen-BefestigungshalterKomponenten (33, 34) an einem zugeordneten Federblatt (42) angeordnet ist, so daß eine relative Bewegung zwischen dem Befestigungshalter und dem Federblatt (42), die anderenfalls eine weitere Verformung des verformbaren Teils (47) bewirken würde, eine Gleitbewegung gegen Reibung zwischen der unteren Komponente (34) und dem Blatt (42) bewirkt.

15. Vorrichtung (29, 39, 49, 59) nach einem der vorhergehenden Ansprüche, dadurch gekennzeichnet, daß das verformbare Teil (27, 37, 47, 57) aus einem elastomerischen Material ist.

16. Fahrzeugaufhängung mit einem Radiusarm (78) oder einer Stabilisierstange, die mit einem zugeordneten Federblatt (71) oder Bolzen (72) durch eine Verbindungseinrichtung (73, 74) mit einer Reibungs-Steuervorrichtung (29, 39, 49, 59) gemäß einem der vorhergehenden Ansprüche verbunden ist.

17. Fahrzeugaufhängung nach Anspruch 16, wobei die Verbindungseinrichtung (73, 74) eine Klemme (73) oder einen Halter (74) aufweist.

18. Fahrzeugaufhängung mit einer Reibungssteuerungs-Einrichtung (29, 39, 49, 59) nach einem der Ansprüche 1 bis 15.

19. Fahrzeug mit einer Aufhängung nach einem der Ansprüche 16 bis 18.

## Revendications

1. Dispositif de contrôle de friction (29) pour une suspension de véhicule ayant au moins deux éléments (21, 22), tels que des lames d'un ressort à lames, qui peuvent coulisser l'un par rapport à l'autre dans leur direction longitudinale (X), le dispositif (20) comprenant un élément déformable élastiquement (27) qui est situé ou qui peut être situé entre les éléments (21, 22) et dont la déformation dans la direction longitudinale (X) des éléments (21, 22), pendant l'utilisation du dispositif (29), est limitée,
caractérisé en ce que les deux éléments (21, 22) peuvent coulisser l'un par rapport à l'autre à l'encontre d'une friction lorsque l'élément (27) a atteint un degré de déformation limité prédéterminé.

2. Dispositif (29) selon la revendication 1, caractérisé en ce que la limite du degré de déformation prédéterminé de l'élément (27) est définie par une butée fixe (25, 26).

3. Dispositif (49) selon la revendication 1 ou 2, caractérisé en ce que l'élément déformable élastiquement (47) est fixé directement à l'un des éléments de la suspension de véhicule.

4. Dispositif (29) selon la revendication 1 ou 2, caractérisé par deux plaques (23, 24) d'une manière générale parallèles, entre lesquelles l'élément déformable élastiquement (27) est fixé et qui comprennent des moyens (25, 26) conçus pour venir en contact l'un avec l'autre quand l'élément (27) a atteint ledit degré de déformation prédéterminé, et pour définir une butée fixe pour ce dernier.

5. Dispositif (29) selon la revendication 4, caractérisé en ce que lesdits moyens conçus pour venir en contact comprennent des extrémités opposées (25, 26) de chaque plaque (23, 24) qui sont pliées vers l'intérieur par rapport à celle-ci, de sorte que des paires correspondantes d'extrémités (25, 26) de plaques pliées respectives peuvent venir en contact les unes avec les autres, pour réaliser la butée fixe quand la déformation de l'élément (27) atteint ledit degré prédéterminé.

6. Dispositif (39) selon l'une quelconque des revendications précédentes, caractérisé par des moyens (38) conçus pour opposer une résistance progressivement croissante à la déformation de l'élément (37), qui se terminent par une ou la butée fixe, selon le cas.

7. Dispositif (39) selon la revendication 6 lorsque celle-ci est dépendante de la revendication 4 ou 5, caractérisé en ce que lesdits moyens (39) de résistance progressivement croissante comprennent un élément déformable élastiquement (39) conçu pour agir entre les plaques (33, 34).

8. Dispositif (39) selon la revendication 7 lorsque la revendication 6 est dépendante de la revendication 5, caractérisé en ce que l'élément déformable élastiquement (37) est conçu pour agir entre des paires coopérantes respectives d'extrémités de plaques pliées (35, 36).

9. Dispositif (29, 39) selon la revendication 4 ou selon l'une quelconque des revendications 5 à 8 lorsque celles-ci sont dépendantes d'elle, caractérisé en ce que l'une des plaques (23, 24 : 33, 34) d'une manière générale parallèles est constituée par l'élément de suspension de véhicule associé (21, 22 : 31, 32), de sorte que l'élément déformable élastiquement (27, 37) est directement fixé à cet élément (21, 22 : 31, 32).

10. Dispositif (59) selon l'une quelconque des revendications précédentes, caractérisé en ce que lesdits deux éléments (51, 52) d'une suspension de véhicule sont des lames respectives (51, 52) d'un ressort à lames multiples dont au moins une lame est conçue pour coulisser par un contact à friction avec une ou la plaque associée, selon le cas, lorsque l'élément (51) atteint ledit degré de déformation limité prédéterminé et serait, sinon, déformé davantage.

11. Dispositif (59) selon la revendication 10, caractérisé par des moyens (60) serrant ensemble les lames (51, 52) du ressort à lames, un autre élément élastique (63) étant situé entre lesdits moyens de serrage (60) et l'une au moins (51) des lames de ressort.

12. Dispositif (59) selon la revendication 11, caractérisé en ce que l'autre élément élastique (63) est fixé à une plaque de serrage (61) desdits moyens de serrage (60).

13. Dispositif (49) selon la revendication 1 ou 2 ou selon la revendication 6 lorsque celle-ci est dépendante de la revendication 1 ou 2, caractérisé en ce que l'élément déformable élastiquement (47) est fixé entre les surfaces en vis-à-vis de deux organes (33, 34) d'une patte de montage de châssis d'un dispositif de suspension élastique à came.

14. Dispositif (49) selon la revendication 13, caractérisé en ce qu'un organe inférieur (34) des deux organes (33, 34) de la patte de montage de châssis est déposé sur une lame de ressort associée (42), de sorte qu'un déplacement relatif entre la patte de montage et la lame de ressort (42), qui provoquerait sinon une déformation supplémentaire de l'organe déformable (47), provoque un mouvement de coulissement, à l'encontre d'une friction, entre l'organe inférieur (34) et la lame (42).

15. Dispositif (29, 39, 49, 59) selon l'une quelconque des revendications précédentes, caractérisé en ce que l'élément déformable élastiquement (27, 37, 47, 57) est fait d'une matière élastomère.

16. Suspension de véhicule comprenant une bielle de poussée (78) ou une barre stabilisatrice fixée à une lame de ressort associée (71) ou à un axe (72) par des moyens de liaison (73, 74) comportant un dispositif de contrôle de friction (29, 39, 49, 59) selon l'une quelconque des revendications précédentes.

17. Suspension de véhicule selon la revendication 16, dans laquelle lesdits moyens de liaison (73, 74) comprennent une attache (73) ou une patte (74).

18. Suspension de véhicule incorporant un dispositif de contrôle de friction (29, 39, 49, 59) selon l'une quelconque des revendications 1 à 15.

19. Véhicule incorporant une suspension selon l'une quelconque des revendications 16 à 18.
